# EUROPÄISCHE PATENTSCHRIFT

(11) **EP 2 387 547 B1**
(45) Veröffentlichungstag und Bekanntmachung des Hinweises auf die Patenterteilung: **25.07.2012**
(21) Anmeldenummer: 10700331.1
(22) Anmeldetag: 14.01.2010
(51) Int. Cl.: C02F 1/00, B01D 27/10, B01D 35/30, A47J 31/60

(54) **VENTILBETÄTIGUNGSEINRICHTUNG EINES VENTILS, FLÜSSIGKEITSBEHÄLTER EINER FLÜSSIGKEITSBEHANDLUNGSVORRICHTUNG SOWIE EINE FLÜSSIGKEITSBEHANDLUNGSVORRICHTUNG**
VALVE ACTUATING DEVICE OF A VALVE, LIQUID TANK OF A LIQUID TREATMENT APPARATUS, AND A LIQUID TREATMENT APPARATUS
DISPOSITIF DE COMMANDE D'UNE SOUPAPE, RÉCIPIENT À LIQUIDES D'UN DISPOSITIF DE TRAITEMENT DE LIQUIDES, ET DISPOSITIF DE TRAITEMENT DE LIQUIDES CORRESPONDANT

(30) Priorität: 14.01.2009 DE 102009000231
(43) Veröffentlichungstag der Anmeldung: 23.11.2011
(73) Patentinhaber: Brita GmbH, 65232 Taunusstein (DE)
(72) Erfinder: NAMUR, Marc, 64297 Darmstadt (DE); TASZAREK, Josef, 65232 Taunusstein (DE)
(74) Vertreter: van Lookeren Campagne, Constantijn August
(86) Internationale Anmeldenummer: PCT/EP2010/050385
(87) Internationale Veröffentlichungsnummer: WO 2010/081845

(56) Entgegenhaltungen:
- EP-A1- 0 616 826
- EP-A1- 1 576 997
- EP-A2- 1 136 110
- DE-A1- 19 615 102
- DE-T2- 60 030 455
- US-A- 3 561 506
- US-A1- 2006 163 148

## Beschreibung

Die Erfindung betrifft eine Ventilbetätigungseinrichtung eines Ventils, das sich in der Auslauföffnung eines Flüssigkeitsbehälters einer Flüssigkeitsbehandlungsvorrichtung befindet. Die Erfindung betrifft auch einen solchen Flüssigkeitsbehälter sowie eine entsprechende Flüssigkeitsbehandlungsvorrichtung.

Flüssigkeitsbehandlungsvorrichtungen können beispielsweise Flüssigkeitsfiltervorrichtungen sein, die insbesondere zur Filtration von Wasser, insbesondere von Trinkwasser, eingesetzt werden.

Derartige Filtervorrichtungen besitzen einen Flüssigkeitsbehälter zur Aufnahme von ungefilterter Flüssigkeit, in dessen Boden ein Auslauf angeordnet ist. Im Auslaufbereich ist eine Kartusche angeordnet, die die Flüssigkeit durchströmen muss, bevor sie den Flüssigkeitsbehälter verlässt.

Hierbei unterscheidet man gravitationsbetriebene Systeme und druckbetriebene Systeme. Für jedes System gibt es entsprechende Kartuschen und Flüssigkeitsbehälter mit entsprechenden Anschlussmitteln.

Bei Kaffee- und Espressomaschinen werden so genannte Saugkartuschen verwendet, die in einem speziellen Wassertank eingesetzt werden, der im Auslaufbereich ein Ventil aufweist. Beim Einsetzen des Wassertanks in die Maschine wird dieses Ventil automatisch geöffnet und beim Herausnehmen automatisch geschlossen, so dass Restmengen an Wasser während des Transports nicht aus dem Wassertank herauslaufen können. Das Öffnen des Ventils wird beispielsweise über einen im Einbauraum befindlichen Stößel bewerkstelligt.

Bei gravitationsbetriebenen Filtersystemen werden Flüssigkeitsbehälter zur Aufnahme des ungefilterten Wassers verwendet, die in der Regel im Bodenbereich eine Aufnahmekammer besitzen, in die eine Filterkartusche mit ihrem oberen Rand abdichtend eingesetzt werden kann. Die Bodenwand dieser Aufnahmekammer besitzt einen Auslauf, so dass das an der Unterseite der Filterkartusche austretende gefilterte Wasser in einen unter dem Flüssigkeitsbehälter befindlichen Auffangbehälter ablaufen kann.

Bei einer Entnahme der Filterkartusche kann ungefiltertes Wasser ungehindert in den Auffangbehälter für gefiltertes Wasser gelangen.

Wenn bei den bekannten Systemen versehentlich ungefiltertes Wasser in den Flüssigkeitsbehälter eingefüllt wird, bevor das System einsatzbereit ist, kann ungefiltertes Wasser in die Flüssigkeitsstrecke des gefilterten Wassers gelangen. Dies kann insbesondere dann eintreten, wenn der Flüssigkeitsbehälter bereits montiert ist, es aber vergessen wurde, die Filterkartusche einzusetzen.

Die US 3,561,506 offenbart eine Flüssigkeitsausgabevorrichtung, die ein Gehäuse, ein mit Flüssigkeit befüllbares Reservoir, einen mit dem Gehäuse verbindbaren Behälter und eine mit dem Gehäuse verbundene Auslasseinheit umfasst. Der Behälter umfasst eine Einlasseinheit und eine gesonderte Auslassöffnung oder Tülle. Die Einlasseinheit ist permanent mit dem Behälter verbunden und umfasst Einlasskanalmittel zum Führen von Flüssigkeit in den Behälter hinein und Sensormittel zum Bestimmen des Flüssigkeitspegels im Behälter. Die Auslasseinheit umfasst Auslasskanalmittel zum Führen von Flüssigkeit aus dem Reservoir zu den Einlasskanalmitteln und mit den Auslasskanalmitteln verbundene Strömungssteuermittel. Die Strömungssteuermittel treten mit den Sensormitteln in Wirkverbindung beim Verbinden des Behälters mit dem Gehäuse, um einen Flüssigkeitsstrom durch die Kanalmittel zu bewirken, wenn der Flüssigkeitspegel im Behälter unter einem bestimmten Wert liegt. Die Flüssigkeitssteuermittel werden durch ein Losmachen des Behälters vom Gehäuse von den Sensormittein gelöst, wobei die Strömungssteuermittel beim Lösen von den Sensormitteln bewirken, dass ein Strömen der Flüssigkeit durch die Auslasskanalmittel unterbunden wird.

Es ist Aufgabe der Erfindung, einen Flüssigkeitsbehälter mit einem Ventil bereitzustellen, der in montierter Stellung und insbesondere ohne eingesetzte Behandlungskartusche eine verschlossene Auslauföffnung aufweist. Es ist auch Aufgabe der Erfindung, eine entsprechende Ventilbetätigungseinrichtung sowie eine Flüssigkeitsbehandlungsvorrichtung anzugeben.

Die Aufgabe wird mit einem Flüssigkeitsbehälter gemäß dem Patentanspruch 4 gelöst.

Der Flüssigkeitsbehälter sieht vor, dass das Ventil sich bei in der Filterbehandlungsvorrichtung eingebautem Flüssigkeitsbehälter in Schließposition befindet und dass eine Ventilbetätigungseinrichtung vorgesehen ist, die beim Anbringen an dem sich in Schließposition befindlichen Ventil zum Öffnen des Ventils mittels Ausüben einer horizontalen Kraftkomponente ausgebildet ist.

Das Ventil ist derart ausgebildet, dass es sich sowohl bei ausgebautem als auch bei eingebautem Flüssigkeitsbehälter in Schließposition befindet, so dass beim versehentlichen Einfüllen von unbehandelter Flüssigkeit diese nicht auslaufen bzw. in die Flüssigkeitsstrecke der behandelten Flüssigkeit gelangen kann.

Um die Auslauföffnung freizuschalten, ist eine zusätzliche Maßnahme erforderlich, die vorzugsweise von der Bedienungsperson zu veranlassen ist.

Hierzu ist eine Ventilbetätigungseinrichtung vorgesehen, die beim Anbringen an dem sich in Schließposition befindenden Ventil zum Öffnen des Ventils ausgebildet ist.

Nur wenn diese Ventilbetätigungseinrichtung aktiviert bzw. eingesetzt wird, kann unbehandelte Flüssigkeit durch die Auslauföffnung abfließen.

Diese Ventilbetätigungseinrichtung kann beispielsweise an der Behandlungskartusche einer Flüssigkeitsbehandlungsvorrichtung angeordnet sein, so dass beim Einsetzen der Behandlungskartusche das Ventil geöffnet wird. Es wird damit sichergestellt, dass nur behandelte Flüssigkeit den Flüssigkeitsbehälter verlassen kann, wenn unbehandelte Flüssigkeit in den Flüssigkeitsbehälter eingefüllt wird.

Andererseits kann es wünschenswert sein, z. B. zum Reinigen des Flüssigkeitsbehälters und hier insbesondere zum Reinigen des Auslaufbereichs, das Ventil in seiner Öffnungsstellung festzulegen. Zu diesem Zweck kann die Ventilbetätigungseinrichtung ein eigenständiges Bauteil sein, das bei Bedarf an dem Ventil angebracht werden kann.

Ein weiteres Beispiel sind Flüssigkeitsfiltervorrichtungen, mit denen eine Flüssigkeit mittels einer Filterkartusche von Fremdstoffen befreit wird. Hier kann es wünschenswert sein, die filtrierte Flüssigkeit mit Zusatzstoffen zu versehen, die bei Trinkwasser beispielsweise Geschmacksstoffe, wie Saftkonzentrate oder dergleichen, sein können.

Soll beispielsweise das filtrierte Wasser als Blumengießwasser dienen, kann es wünschenswert sein, auch ein Düngemittel beizugeben.

Zusatzstoffe dürfen in der Regel die Filterkartusche nicht passieren, weil einerseits dadurch die Wirksamkeit der Filterkartusche beeinträchtigt werden könnte und andererseits die Zusatzstoffe durch die Filterkartusche ihre Wirksamkeit verlieren würden.

Um die Flüssigkeitsbehandlungsvorrichtung nicht auseinanderbauen zu müssen, um diese Zusatzstoffe in den Auffangbehälter einbringen zu können, können bei Bedarf mittels des eigenständigen Bauteils der Ventilbetätigungseinrichtung das Ventil für den Durchlauf der Zusatzstoffe in Öffnungsstellung gebracht werden, so dass die Zusatzstoffe durch die Auslauföffnung in den für die behandelte Flüssigkeit vorgesehenen Auffangbehälter gelangen können. Danach kann die Ventilbetätigungseinrichtung entfernt und die Filterkartusche, die ebenfalls vorzugsweise mit einer solchen Ventilbetätigungseinrichtung versehen ist, eingesetzt werden, um die Filtration der Flüssigkeit durchzuführen. Die filtrierte Flüssigkeit vermischt sich dann in dem betreffenden Auffangbehälter mit dem oder den dort befindlichen Zusatzstoffen.

Die Ventilbetätigungseinrichtung kann mindestens ein Betätigungselement aufweise.

Vorzugsweise ist das Betätigungselement steckbar.

Das Betätigungselement kann ein Druckelement sein oder ein Zugelement.

Bezüglich der Materialien können starre Materialien oder auch elastische Materialien vorgesehen sein. Vorzugsweise ist das Betätigungselement ein elastisches Element. Dies kann beispielsweise auch ein Federelement sein.

Bezüglich der Gestalt kann das Betätigungselement ein Stift, eine Platte, ein Ring, eine Kugel oder eine Hülse sein. Weitere bevorzugte Ausgestaltungen sind eine elastische Druckplatte, ein elastischer Druckkörper, ein V-förmiges Element, ein Zugmittel, eine gebogene Hülse, ein Distanzring, eine Feder, ein Bügel, ein Distanzkörper, ein Zugring, eine Kreisscheibe, ein Federbein oder eine Druckscheibe.

Diese genannten bevorzugten Ausführungsformen eines Ventilbetätigungselementes können als eigenständiges Bauteil, als Bestandteil einer Behandlungskartusche oder auch als Bestandteil des Flüssigkeitsbehälters ausgeführt sein.

Der Flüssigkeitsbehälter weist ein Ventil auf, das einen beweglichen Absperrkörper und einen Ventilsitz umfasst, wobei der Absperrkörper in einer Ventilkammer gefangen ist.

Der Absperrkörper ist in der Ventilkammer in horizontaler und vertikaler Richtung beweglich. Diese freie Beweglichkeit des Absperrkörpers ermöglicht den Einsatz von in horizontaler Richtung angreifenden Ventilbetätigungseinrichtungen bzw. Betätigungselementen.

Der Absperrkörper kann durch Angreifen einer horizontalen Kraftkomponente zur Freigabe des Ventilsitzes und somit zur Freigabe der Auslauföffnung z. B. gekippt werden.

Es ist daher bevorzugt, dass der Absperrkörper ein aus der Ventilkammer herausragendes Element aufweist, das bevorzugt ein exzentrisch angeordneter Hebel ist.

Dieser Hebel weist vorzugsweise eine Nockenfläche auf, an der die Ventilbetätigungseinrichtung angreifen kann.

In einer bevorzugten Ausgestaltung des erfindungsgemäßen Flüssigkeitsbehälters, bei dem der Absperrkörper eine Längsachse aufweist, erstreckt sich der Hebel ausgehend von der Nockenfläche bis zur Längsachse oder darüber hinaus. Der Absperrkörper ist so ausgestaltet, dass er die Auslauföffnung dadurch freigibt, dass er nach innen gekippt wird. Diese Ausgestaltung des Hebels verhindert oder erschwert zumindest, dass der Absperrkörper beim Einsetzen der Kartusche durch die Ventilbetätigungseinrichtung oder durch das Betätigungselement nach außen gekippt wird, wodurch Beschädigungen am Ventil hervorgerufen werden könnten.

Der Hebel erstreckt sich vorzugsweise von dem Absperrkörper senkrecht nach oben.

Die Ventilkammer ist nach unten durch den Ventilsitz und nach oben durch eine Sperrscheibe begrenzt.

In einer vorteilhaften Ausgestaltung des Flüssigkeitsbehälters wird der Ventilsitz von einem Ventilsitzkörper gebildet, wobei der Ventilsitzkörper die Ventilkammer nach unten und seitlich und die Sperrscheibe die Ventilkammer nach oben begrenzt. In dieser Ausgestaltung ist die Ventilkammer aus separaten Bauteilen aufgebaut, was die Fertigung und die Montage erleichtert. Der Ventilsitzkörper kann unlösbar, etwa durch Schweißen, oder lösbar, zum Beispiel durch eine Schraubverbindung, mit dem Flüssigkeitsbehälter verbunden werden.

Diese Sperrscheibe weist vorzugsweise einen Schlitz auf, durch den der Hebel aus der Ventilkammer herausragen kann.

Vorteilhafterweise ist der Absperrkörper zwischen dem Ventilsitz und der Sperrscheibe bewegbar. Der Absperrkörper kann allein durch die Schwerkraft bewegt werden, so dass der Absperrkörper durch Drehen des Flüssigkeitsbehälters von seiner Gebrauchsstellung um in etwa 180° aus dem Ventilsitz zur Sperrscheibe hin bewegt wird. Der Schlitz in der Sperrscheibe dient dabei als Führung und gewährleistet dabei, dass der Absperrkörper wieder in den Ventilsitz zurück gestellt wird, sobald der Flüssigkeitsbehälter in seine Gebrauchsstellung gebracht wird.

Je nach Gestaltung des Hebels und des Schlitzes kann beim Umdrehen des Flüssigkeitsbehälters der Absperrkörper an der Sperrscheibe anschlagen oder zwischen dem Ventilsitz und der Sperrscheibe in eine Endstellung gebracht werden. In beiden Fällen wird der Absperrkörper durch das Drehen des Flüssigkeitsbehälters aus seiner Gebrauchsstellung aus dem Ventilsitz bewegt, so dass der Durchfluss durch das Ventil freigegeben wird, was insbesondere dann vorteilhaft ist, wenn der Flüssigkeitsbehälter zu Reinigungszwecken beispielsweise in eine Spülmaschine gestellt wird. Somit wird eine bessere und gründlichere Reinigung des Flüssigkeitsbehälters erreicht.

Das Ventil ist vorzugsweise in eine beliebige Drehwinkelstellung einbaubar. Diese Ausgestaltung hat den Vorteil, dass bei der Montage das Justieren und Überprüfen der relativen Position des Ventils zum Aufnahmebehälter entfällt. Diese Ausführungsform wird bevorzugt in Kombination mit rotationssymmetrischen Ventilbetätigungseinrichtungen an der Behandlungskartusche verwendet.

Je nach Zugänglichkeit des Ventils ist es bevorzugt, die Ventilbetätigungseinrichtung von oben in die Auslauföffnung oder von unten einsteckbar auszubilden.

Die Ventilbetätigungseinrichtung kann ein eigenständiges Bauteil umfassen, wie bereits im Zusammenhang mit der Ventilbetätigungseinrichtung erläutert worden ist.

Gemäß einer besonderen Ausführungsform kann die Ventilbetätigungseinrichtung Bestandteil des Flüssigkeitsbehälters sein.

Gemäß einer besonderen Ausführungsform kann die Ventilbetätigungseinrichtung in der Auslauföffnung des Flüssigkeitsbehälters angeformt sein. Hierzu eignen sich insbesondere rippenförmige Elemente. Insbesondere dann, wenn das Absperrventil drehbar in der Auslauföffnung des Flüssigkeitsbehälters angeordnet ist, kann das Ventil so weit gedreht werden, bis das oder die rippenförmigen Elemente an dem Hebel angreifen und das Ventil in Öffnungsstellung bringen.

Diese rippenförmigen Elemente sind vorzugsweise vertikal, d. h. in Strömungsrichtung angeordnet. Andere Ausgestaltungen der rippenförmigen Elemente sind möglich, wenn der Hebel, der an dem Absperrkörper angebracht ist, entsprechend ausgebildet ist und betätigt werden kann.

Die Flüssigkeitsbehandlungsvorrichtung ist mit einer Flüssigkeitsbehandlungskartusche und mit einem Flüssigkeitsbehälter, wie er bereits beschrieben worden ist, ausgestattet.

Die Flüssigkeitsbehandlungsvorrichtung besitzt eine Ventilbetätigungseinrichtung, die vorzugsweise an der Behandlungskartusche angeordnet ist. Sämtliche Ausgestaltungen, die im Zusammenhang mit der Ventilbetätigungseinrichtung beschrieben worden sind, können an der Behandlungskartusche angebracht sein.

Vorzugsweise ist die Ventilbetätigungseinrichtung ein ringförmiges Element. Dieses ringförmige Element kann im Bereich der Auslauföffnung der Behandlungskartusche angeordnet sein und wird vorzugsweise beim Einsetzen der Behandlungskartusche in Wirkzusammenhang mit dem Absperrventil gebracht.

Das ringförmige Element kann ein geschlossenes oder auch ein beispielsweise durch vertikale Schlitze unterteiltes ringförmiges Element sein. Insofern kann die Betätigungseinrichtung auch aus einem Fingerkranz bestehen. Hierbei ist es bevorzugt, die Schlitzbreite zwischen den Fingern des Fingerkranzes kleiner als die Breite des Hebels zu wählen, damit sichergestellt ist, dass in jeder Stellung des Absperrventils eine sichere Betätigung und damit Öffnung des Auslassventils beim Einsetzen der Behandlungskartusche gewährleistet ist.

Vorzugsweise ist die Flüssigkeitsbehandlungsvorrichtung eine Flüssigkeitsfiltervorrichtung. In diesem Fall ist die Behandlungskartusche eine Filterkartusche.

Eine bevorzugte Verwendung der Flüssigkeitsbehandlungsvorrichtung ist die Filtration von Wasser.

Bevorzugte Ausführungsformen der Erfindung werden nachfolgend anhand der Zeichnungen näher erläutert.

Es zeigen:
- Figur 1: einen Verükalschnitt durch eine Flüssigkeitsbehandlungsvorrichtung,
- Figur 2a: eine perspektivische Darstellung eines Absperrkörpers des Ventils gemäß einer ersten Ausführungsform,
- Figur 2b: eine Seitenansicht des in Figur 2a gezeigten Absperrkörpers,
- Figur 3a: eine perspektivische Darstellung eines Absperrkörpers des Ventils gemäß einer zweiten Ausführungsform,
- Figur 3b: eine Seitenansicht des in Figur 3a gezeigten Absperrkörpers,
- Figuren 4 bis 10: verschiedene Ausführungsformen einer Ventilbetätigungseinrichtung, die an einer Behandlungskartusche angeordnet sind,
- Figuren 11 bis 32: verschiedene Ausführungsformen einer eigenständigen Ventilbetätigungseinrichtung, und
- Figur 33: eine Ventilbetätigungseinrichtung, die Bestandteil des Flüssigkeitsbehälters ist.

Die verschiedenen Ausführungsformen werden nachfolgend anhand einer Flüssigkeitsbehandlungsvorrichtung 1 erläutert, die als Wasserfiltereinrichtung ausgebildet ist.

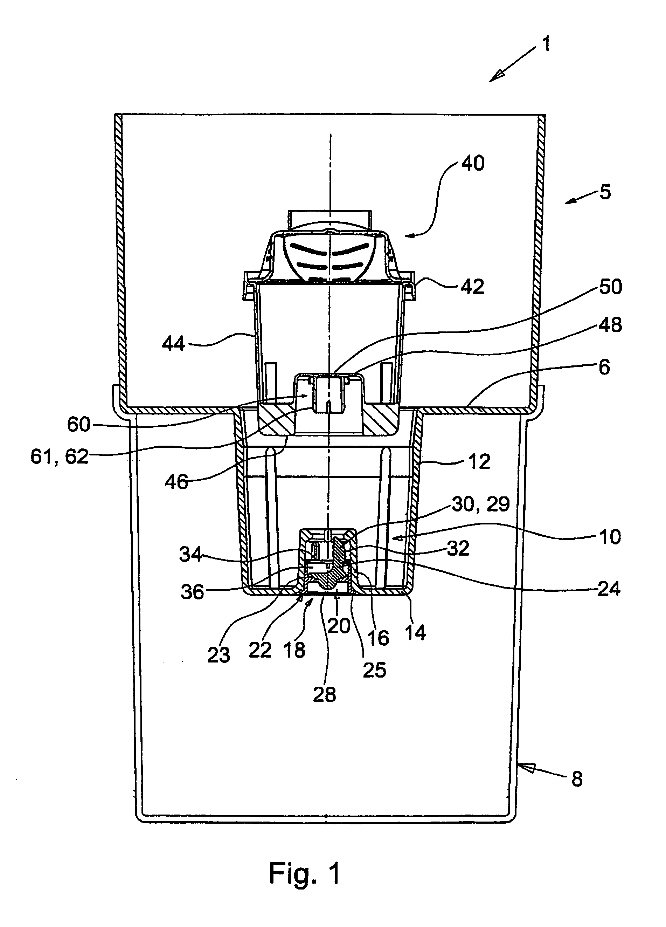

In der Figur 1 ist eine Flüssigkeitsbehandlungseinrichtung 1 als Wasserfiltereinrichtung dargestellt, die einen Flüssigkeitsbehälter 5 zur Aufnahme von unfiltriertem Wasser und darunter einen Auffangbehälter 8 zur Aufnahme von gefiltertem Wasser aufweist.

Der Flüssigkeitsbehälter 5 besitzt eine Bodenwand 6, in der eine Aufnahmekammer 10 angeordnet ist. Die Aufnahmekammer 10 wird durch eine Umfangswand 12 und eine Bodenwand 14 gebildet.

In diese Aufnahmekammer 10, die in der Bodenwand 14 eine Auslauföffnung 18 aufweist, wird eine Flüssigkeitsbehandlungskartusche 40, die in diesem besonderen Beispiel eine Filterkartusche ist, eingesetzt. Diese Filterkartusche 40 besitzt einen Dichtrand 42, eine Kartuschenwand 44 und einen Kartuschenboden 46, der eine Einstülpung 48 mit einer Auslauföffnung 50 aufweist.

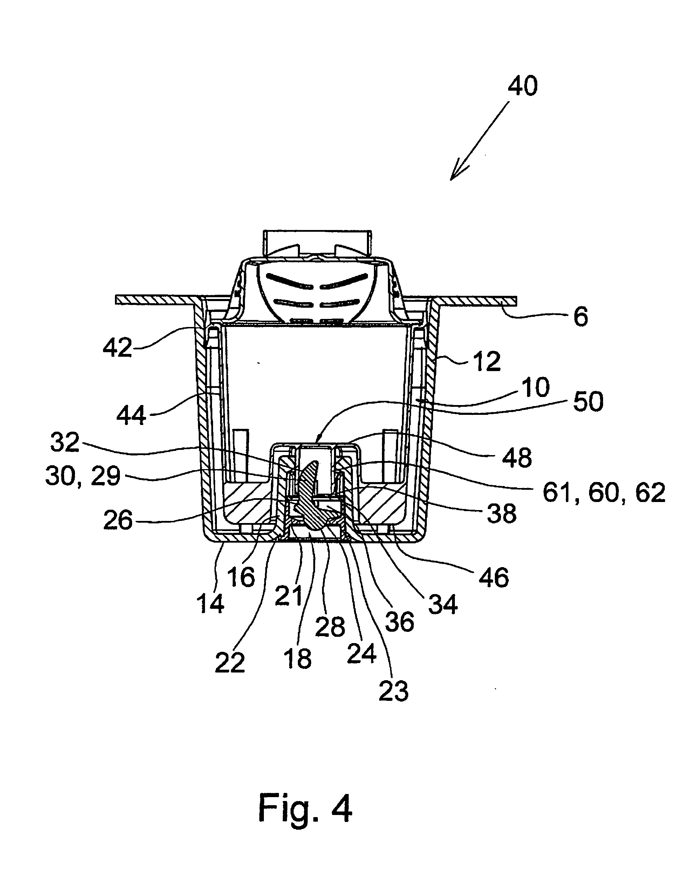

In der in Figur 1 gezeigten Darstellung ist die Filterkartusche 40 noch nicht vollständig in die Aufnahmekammer 10 eingesetzt. Die Filterkartusche 40 besitzt eine Ventilbetätigungseinrichtung 60, die ein angeformtes Betätigungselement 61 in Gestalt eines ringförmigen Dorns 62 umfasst. In der Figur 4 ist die Filterkartusche im vollständig eingesetzten Zustand dargestellt. Die Einzelheiten der Filterkartusche 40 werden im Zusammenhang mit der Figur 4 erläutert

In der Auslauföffnung 18 ist ein Ventil 20 von unten eingesetzt, das einen Ventilsitzkörper 22 mit einem Ventilsitz 23 in Form eines angeformten Dichtrings aufweist. Der Ventilsitzkörper 22 ist hülsenförmig ausgebildet und an den Durchmesser dieser Einstülpung 16 angepasst, so dass er in die Einstülpung 16 der Bodenwand 14 der Aufnahmekammer 10 eingesetzt werden kann. Der Ventilsitzkörper 22 kann beispielsweise unlösbar, beispielsweise durch Schweißen oder lösbar mittels eines Gewindes mit dem Flüssigkeitsbehälter 5 verbunden werden. Der Ventilsitzkörper 22 erstreckt sich nicht über die gesamt vertikale Länge der Einstülpung 16.

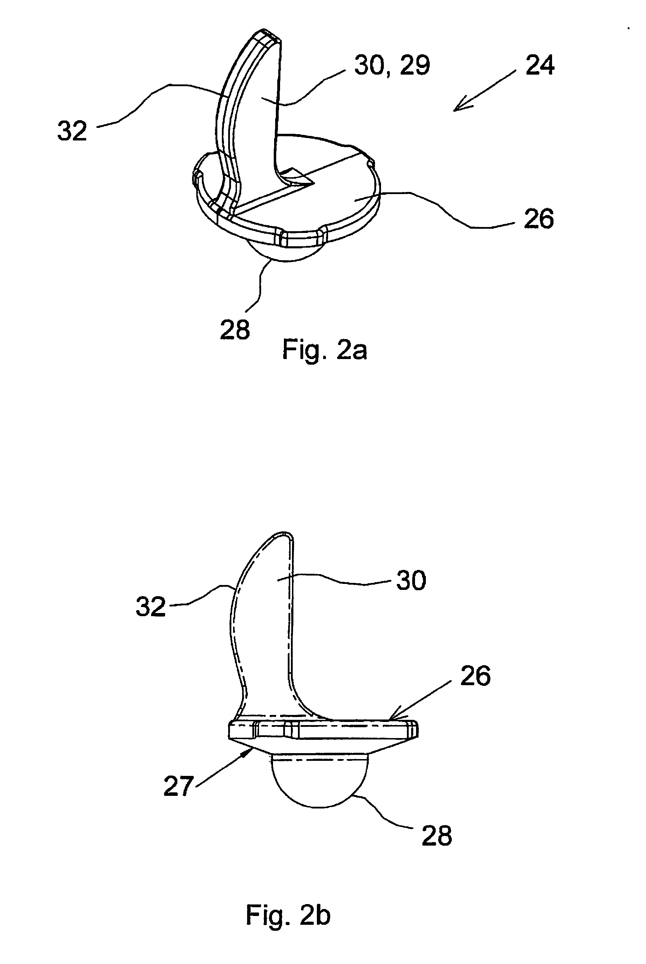

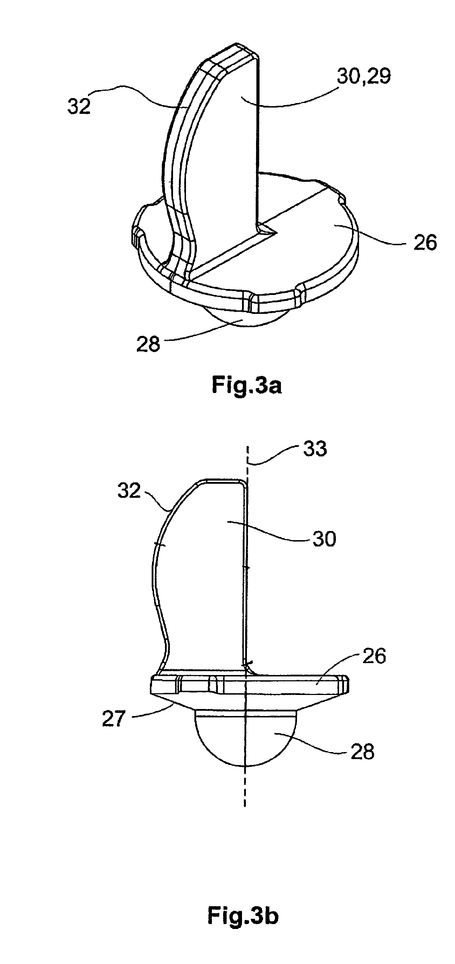

Um den Ventilsitzkörper 22 zu fixieren, weist dieser einen nach außen weisenden Ringbund 25 auf, der an dem Übergangsbereich zwischen Bodenwand 14 und Einstülpung 16 anliegt. Auf dem als Dichtring ausgebildeten Ventilsitz 23 liegt ein Absperrkörper 24 auf, der eine mit dem Ventilsitz zusammenwirkende Dichtscheibe 26 (siehe Figuren 2a, 2b oder 3a, 3b) aufweiset, an dessen Unterseite ein kugelförmiger Vorsprung 28 und an dessen Oberseite ein Element 29 in Gestalt eines Hebels 30 angeordnet ist.

Der kugelförmige Vorsprung 28 dient als Abtropfhilfe. Das Element 29, das als Hebel 30 ausgebildet ist, weist an der Außenseite eine Nockenfläche 32 auf.

Der Absperrkörper24 ist in der Ventilkammer 36 gefangen, die nach oben mittels einer Sperrscheibe 34 begrenzt wird. In der Sperrscheibe 34 befindet sich ein Schlitz 38, durch den der Hebel 30 nach oben aus der Ventilkammer 36 herausragt. Dieser Schlitz 38 kann als Führung für den Hebel 30 und damit für den Absperrkörper 24 dienen.

Der Absperrkörper 24 ist in den Figuren 2a, 2b und 3a, 3b vergrößern dargestellt. Es ist zu sehen, dass die Dichtscheibe 26 an der Unterseite eine konische Dichtfläche 27 aufweist, die mit dem Ventilsitz 23 (siehe Fig. 1) in Schließstellung zusammenwirkt. Das Element 29 in Gestalt des Hebels 30 mit seiner Nockenfläche 32 ist exzentrisch an der Dichtscheibe 26 nach oben aufragend angeordnet. An der Unterseite der Dichtscheibe 26 befindet sich außerdem der kugelförmige Vorsprung 28.

Die in den Figuren 3a und 3b gezeigte Ausführungsform unterscheidet sich von der in den Figuren 2a und 2b gezeigten Ausführungsform dadurch, dass der Hebel 30 ausgehend von der Nockenfläche 32 bis zu einer Längsachse 33 der Dichtscheibe reicht. Es ist auch denkbar, dass sich der Hebel 30 ausgehend von der Nockenfläche 32 über die Längsachse 33 hinaus erstreckt.

In der Figur 4 ist die Filterkartusche 40 vollständig und abdichtend in der Aufnahmekammer 10 eingesetzt. Hierbei liegt der Dichtrand 42 der Filterkartusche 40 abdichtend an der Innenseite der Umfangswand 12 der Aufnahmekammer 10 an. Dadurch wird verhindert, dass Flüssigkeit aus dem Flüssigkeitsbehälter 5 unbehandelt in die Aufnahmekammer 10 und somit aus dieser Aufnahmekammer 10 in den darunter befindlichen Auffangbehälter 8 (siehe Fig. 1) gelangen kann. Die zu behandelnde Flüssigkeit durchströmt die Filterkartusche 40 und tritt an der Auslassöffnung 50 aus.

Die Filterkartusche 40 besitzt die Einstülpung 48, an deren Unterseite eine Ventilbetätigungseinrichtung 60 in Gestalt eines ringförmigen Dorns 62 ausgebildet ist. Diese Ventilbetätigungseinrichtung 60 besitzt somit ein Betätigungselement 61, das Bestandteil der Filterkartusche ist.

Wie der Figur 4 zu entnehmen ist, taucht dieser ringförmige Dom in die Einstülpung 16 der Aufnahmekammer 10 ein und erstreckt sich bis in den Bereich des Hebels 30, so dass die Innenfläche des ringförmigen Dorns 62 an der Nockenfläche 32 des Hebels 30 angreift. Dadurch wird der Absperrkörper 24 in eine Kippstellung gebracht, so dass die Ventilöffnung 21, die vom Ventilsitz 23 begrenzt wird, freigegeben wird. Das durch die Filterkartusche 40 filtrierte Wasser kann somit durch die Ventilöffnung 21 nach unten in den darunter befindlichen Auffangbehälter 8 (in Figur 4 nicht dargestellt) auslaufen.

Mit der in den Figuren 3a und 3b gezeigten Ausführungsform wird sichergestellt, dass das Betätigungselement 61 nur an der Nockenfläche 32 des Hebels 30 angreifen kann. Somit wird verhindert, dass der Absperrkörper 24 mittels eines nicht an der Nockenfläche 32 angreifenden Betätigungselements nach außen gedrückt werden kann. Sobald die Filterkartusche 40 aus der Aufnahmekammer 10 herausgezogen wird, fällt der Absperrkörper 24 in seine Schließposition, in der die Dichtfläche 27 der Dichtscheibe 26 auf dem Ventilsitz 23 aufliegt.

Wird jedoch der Flüssigkeitsbehälter 5 nach Herausziehen der Filterkartusche 40 um etwa 180° gedreht, wird der Absperrkörper 24 aus dem Ventilsitz 23 heraus und zur Sperrscheibe 34 hin bewegt. Das Ventil 20 wird geöffnet, so dass Flüssigkeit hindurchtreten kann, beispielsweise, wenn der Flüssigkeitsbehälter zum Reinigen in eine Spülmaschine gestellt wird.

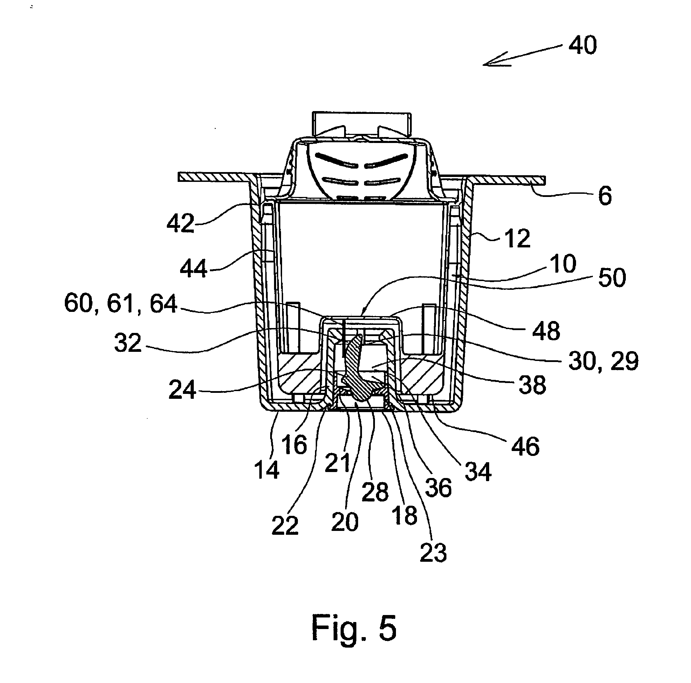

In der Figur 5 ist eine weitere Ausführungsform dargestellt, die einen Stift 64 zeigt, der an der Unterseite der Einstülpung 48 der Filterkartusche 40 angeordnet ist. Auch dieses Betätigungselement 61 greift an der Nockenfläche 32 des Hebels 30 beim Einsetzen der Filterkartusche an.

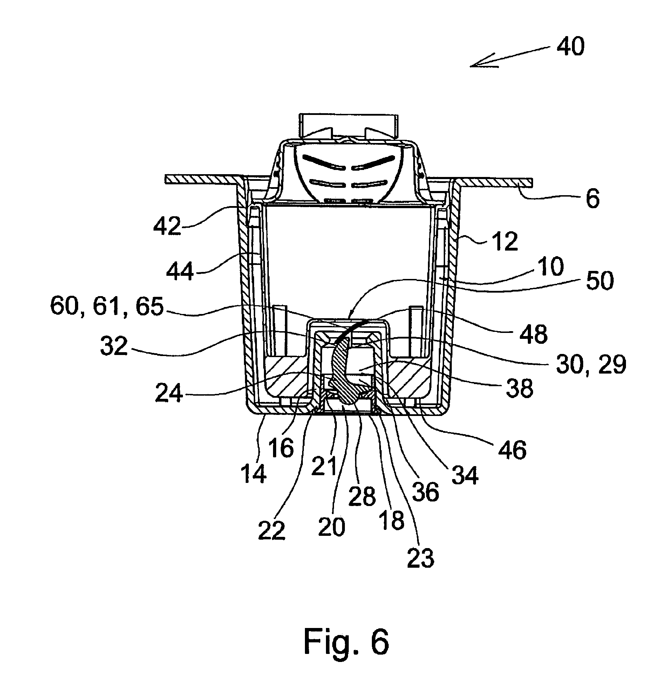

In der Figur 6 ist eine weitere Ausführungsform dargestellt, bei der die Ventilbetätigungseinrichtung 60 aus einer Platte 65 besteht, die aus einem elastischen Material gefertigt ist. Die Platte 65 erstreckt sich schräg nach unten und greift am oberen Abschnitt der Nockenfläche 32 des Hebels 30 an. Diese elastische Druckplatte 65 hält den Absperrkörper in Offenstellung, wenn die Filterkartusche 40 eingesetzt ist.

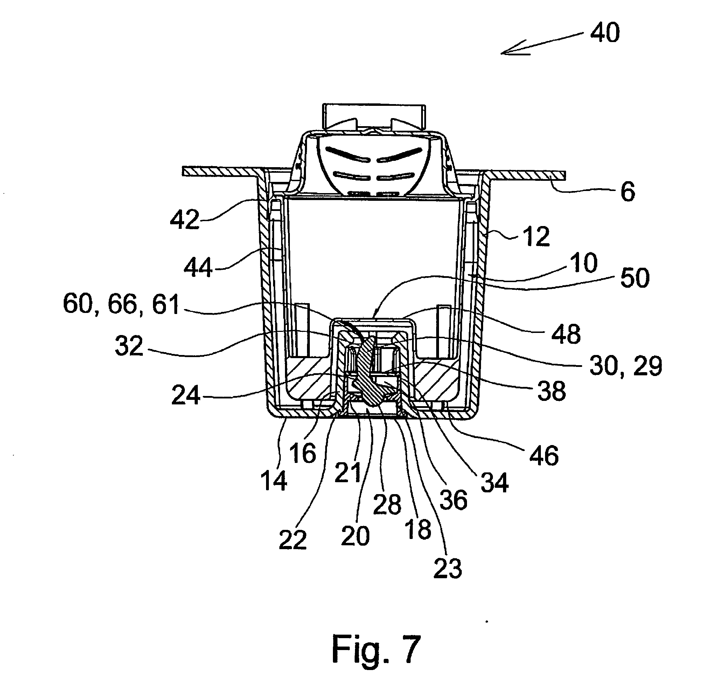

Eine weitere Ausführungsform ist in der Figur 7 dargestellt, wo eine elastische Druckplatte 66 als Betätigungselement 61 vorgesehen ist. Im Gegensatz zu der Anordnung in der Figur 6 befindet sich diese elastische Druckplatte 66 auf der gegenüberliegenden Seite der Auslassöffnung 50 der Filterkartusche 40.

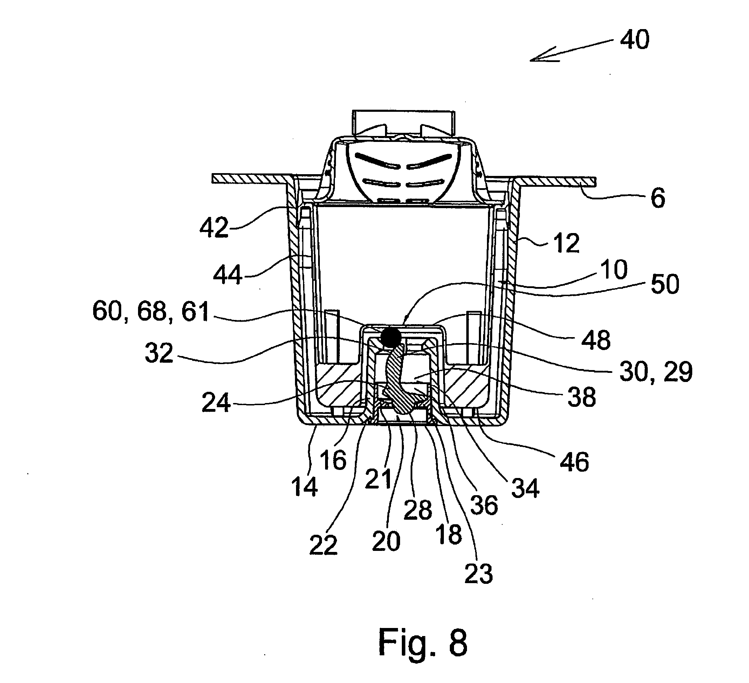

In der Figur 8 ist ein elastischer Druckkörper 68 an der Unterseite der Einstülpung 48 der Filterkartusche 40 angeordnet. Dieser elastische Druckkörper 68 kann ein kugelförmiges Element oder auch ein zylindrisches Element sein. Bei dieser Ausführungsform greift der elastische Druckkörper 68 im Bereich der oberen Spitze des Hebels 30 an und bewegt den Absperrkörper 24 in Öffnungsstellung.

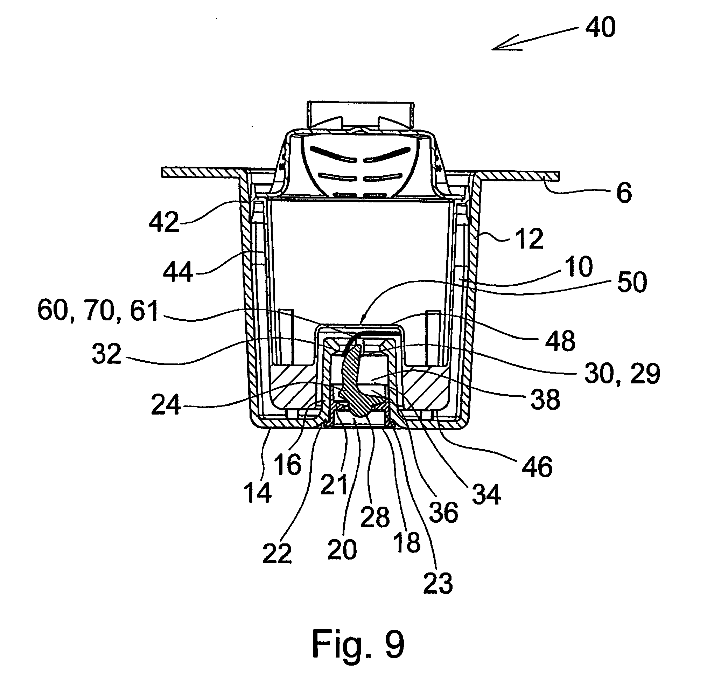

In der Figur 9 ist ein Ventilbetätigungselement 61 in Gestalt eines Zugmittels 70 dargestellt. Es handelt sich um ein in horizontaler Richtung angeordnetes plattenförmiges Element, das an seinem freien Ende nach unten abgebogen ist, so dass dieses an dem Hebel 30 angreifen kann.

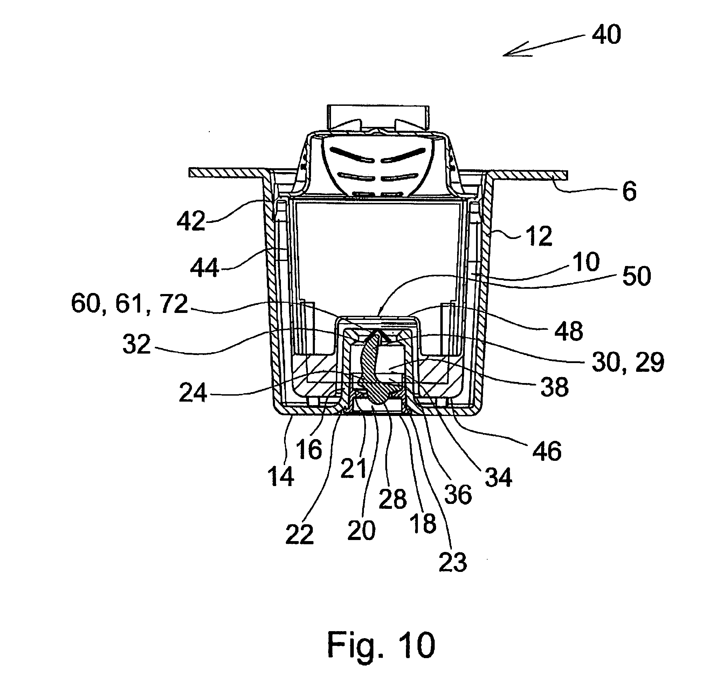

In der Figur 10 ist eine Ausführungsform dargestellt, die ein V-förmiges Element 72 zeigt, das an der Unterseite der Einstülpung 48 der Filterkartusche 40 angeordnet ist. Die flügelförmigen Abschnitte des V-förmigen Elementes 72 sind dazu geeignet, unabhängig von der Dreheinbaulage des Ventils 20 ein sicheres Erfassen des Hebels 30 sicherzustellen.

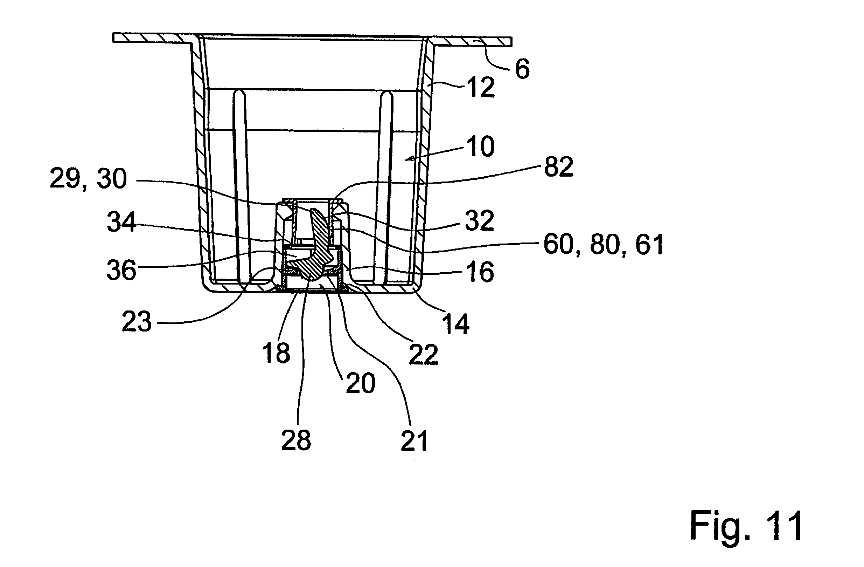

In den Figuren 11ff. sind Ausführungsformen dargestellt, die Ventilbetätigungseinrichtungen als eigenständige Bauteile zeigen. Es handelt sich hierbei um einsetzbare Ventilbetätigungseinrichtungen, die unabhängig von der Filterkartusche oder der Behandlungskartusche 40 zur Festlegung der Offenstellung des Ventils 20 eingesetzt werden können.

In der Figur 11 ist eine Ausführungsform dargestellt, bei der die Ventilbetätigungseinrichtung 60 aus einer Hülse 80 besteht, die in die Auslauföffnung 18 der Aufnahmekammer 10 einsteckbar ist. Die Hülse 80 weist einen Außenbund 82 auf, der auf dem Rand der Öffnung 18 aufliegt. Die Hülse 80 erstreckt sich so weit nach unten, dass die Nockenfläche 32 des Hebels 30 erfasst wird und der Absperrkörper in seine Offenstellung gedrückt bzw. gekippt wird.

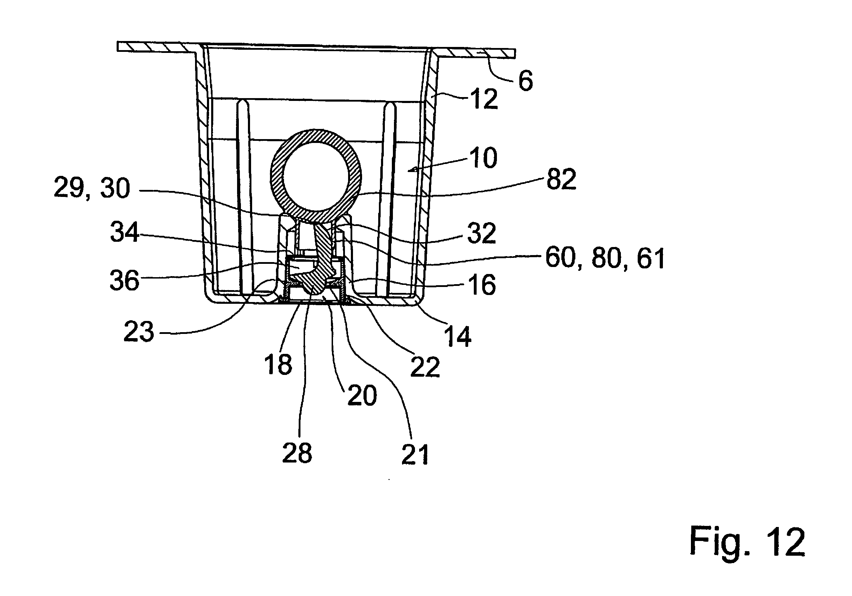

In der Figur 12 ist diese Hülse 80 nochmals dargestellt, die am oberen Ende einen Ringgriff 84 aufweist, an dem die Ventilbetätigungseinrichtung 60 zum leichteren Ein- und Ausbau erfasst werden kann.

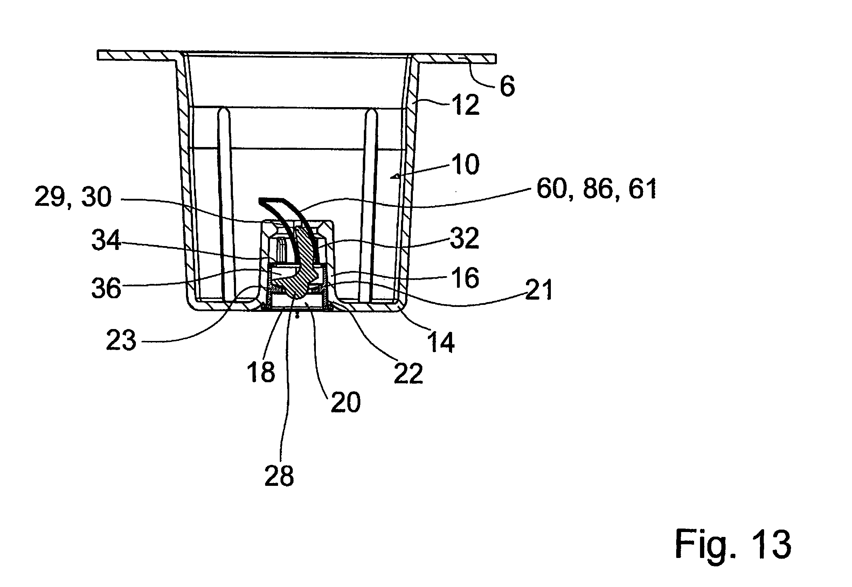

In der Figur 13 ist eine gebogene Hülse 86 als Ventilbetätigungseinrichtung 60 dargestellt. Diese Hülse wird über den Hebel 30 geschoben. Die gebogene Hülse 86 ist hier als geschlossene Hülse dargestellt.

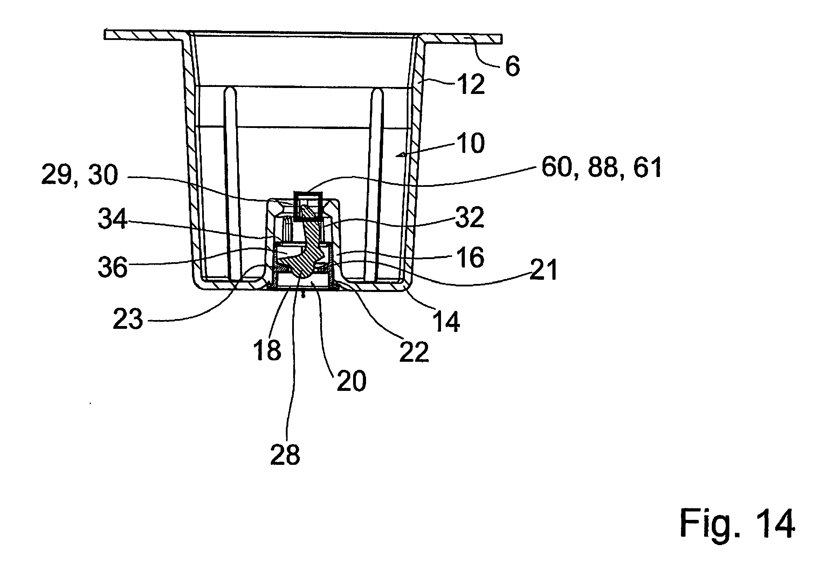

In der Figur 14 ist ein ringförmiges Element (Distanzring 88) dargestellt, der ebenfalls über das freie Ende des Hebels 30 gesteckt wird, so dass der Absperrkörper 24 in Offenstellung gehalten wird.

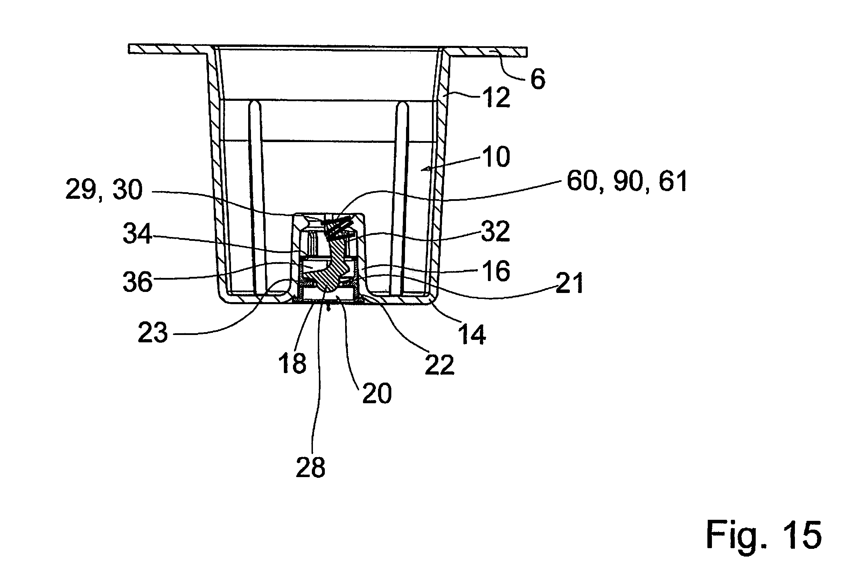

In der Figur 15 ist ein über den Hebel 30 geschobenes federndes Element 90 dargestellt. Es kann sich hierbei auch um ein gewickeltes Band oder um einen Schlauch handeln. Es muss nur sichergestellt sein, dass durch das Element 90 der Absperrkörper 24 in Offenstellung gehalten wird.

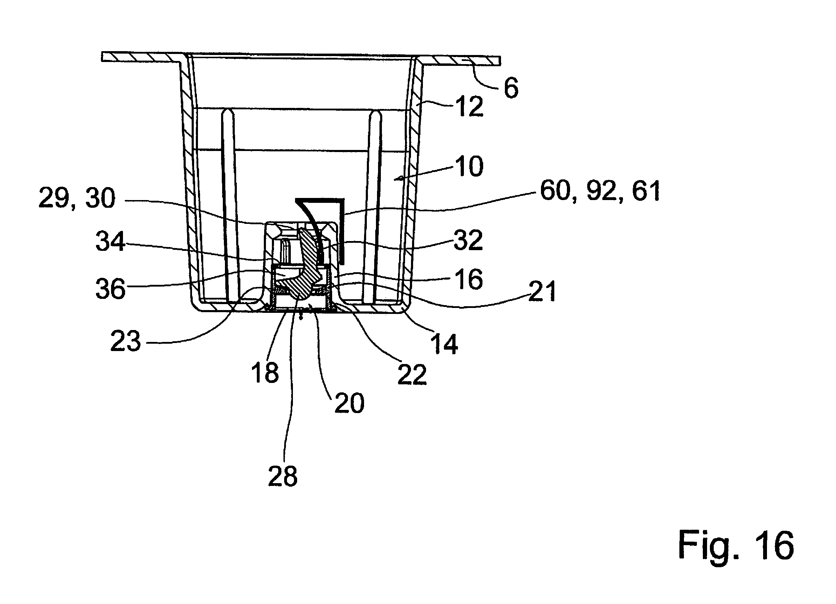

In der Figur 16 ist ein Bügel 92 dargestellt, der über die Einstülpung 16 gesteckt wird und einerseits an der Außenfläche der Einstülpung 16 anliegt und andererseits in die Auslauföffnung 18 eingreift, so dass der Hebel 30 in horizontaler Richtung bewegt wird.

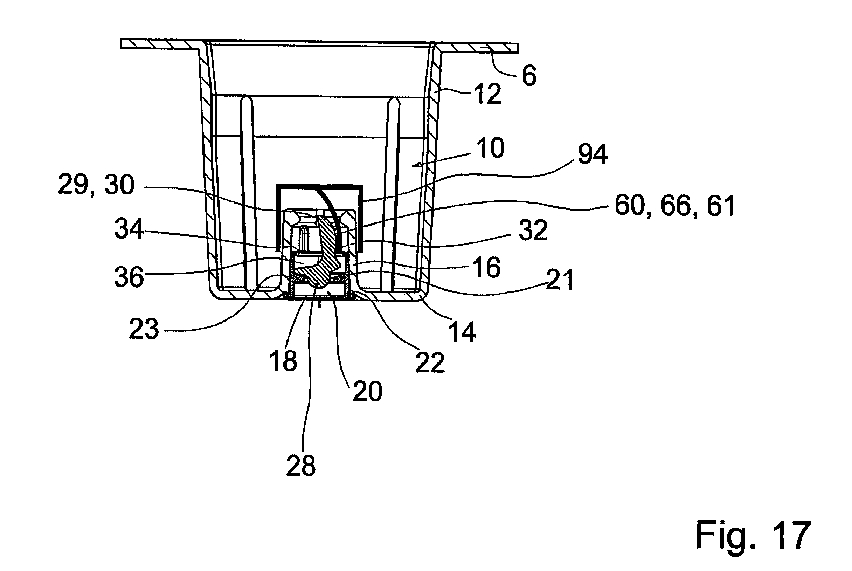

Eine modifizierte Ausgestaltung ist in Figur 17 dargestellt, wobei die Ventilbetätigungseinrichtung 60 aus einer gekrümmten plattenförmigen Druckplatte 66 besteht, die an einer auf die Einstülpung 16 aufsteckbaren Kappe 94 angeordnet ist. Diese Kappe 94 übergreift die Einstülpung 16.

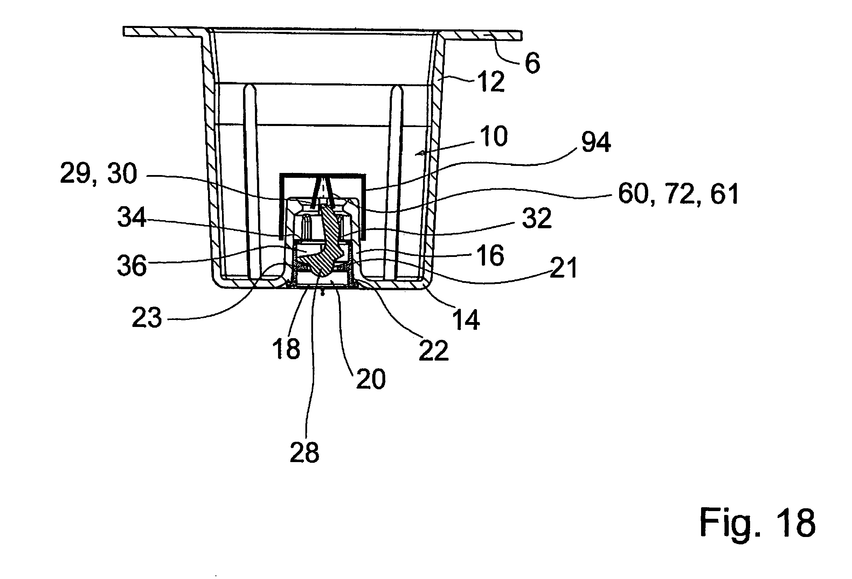

In der Figur 18 ist ebenfalls eine solche Kappe 94 dargestellt, die mit einem V-förmigen Element 72 an der Innenseite versehen ist.

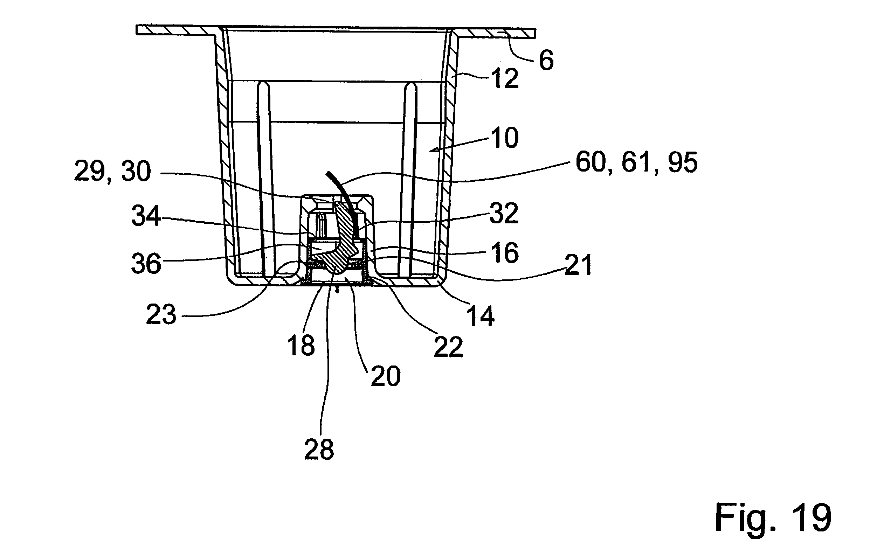

In der Figur 19 ist eine einfache Ausführungsform des Betätigungselements 61 in Gestalt einer gekrümmten Druckplatte 95 dargestellt, die in die Auslauföffnung 18 eingesteckt wird und auf diese Art und Weise den Hebel 30 in horizontaler Richtung verschiebt, so dass die Auslauföffnung 18 freigegeben wird.

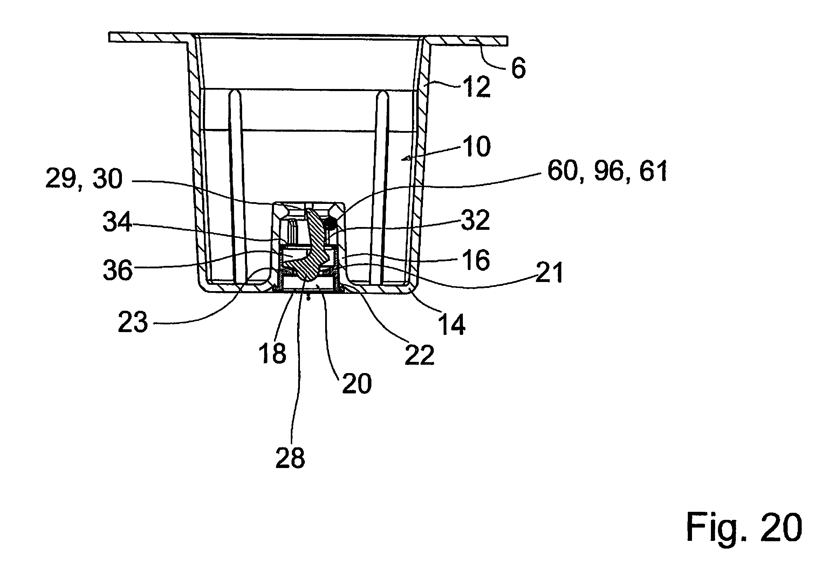

In ähnlicher Weise ist in der Figur 20 ein kugel- oder zylinderförmiges Element 96 dargestellt, das ebenfalls zwischen die Einstülpung und den Hebel 30 eingesetzt ist.

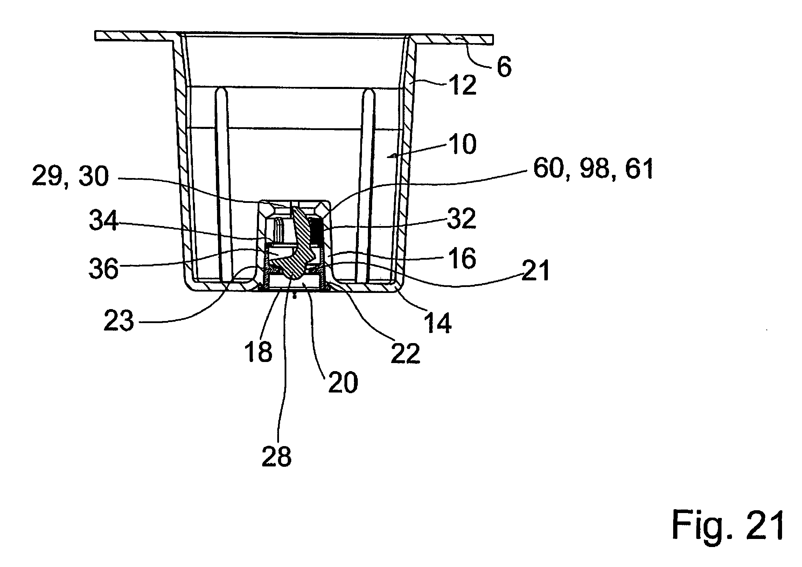

Anstelle eines kugelförmigen Elementes kann auch ein Streifen oder ein Element mit einem rechteckigen Querschnitt eingesetzt werden. Ein solcher Distanzkörper 98 ist in der Figur 21 zu sehen.

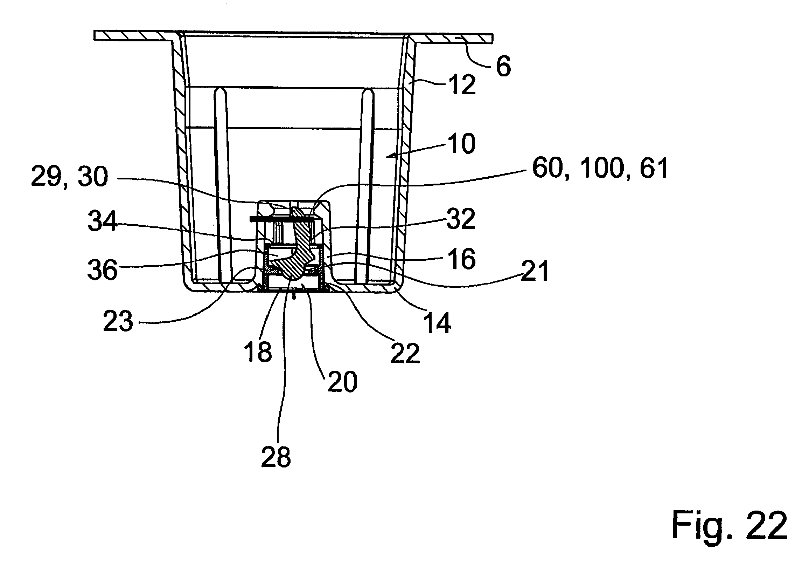

In der Figur 22 ist ein Zugmittel in Gestalt eines Zugrings 100 als Ventilbetätigungseinrichtung 60 dargestellt, der an der Einstülpung 16 anliegt und den Hebel 30 in Offenstellung hält.

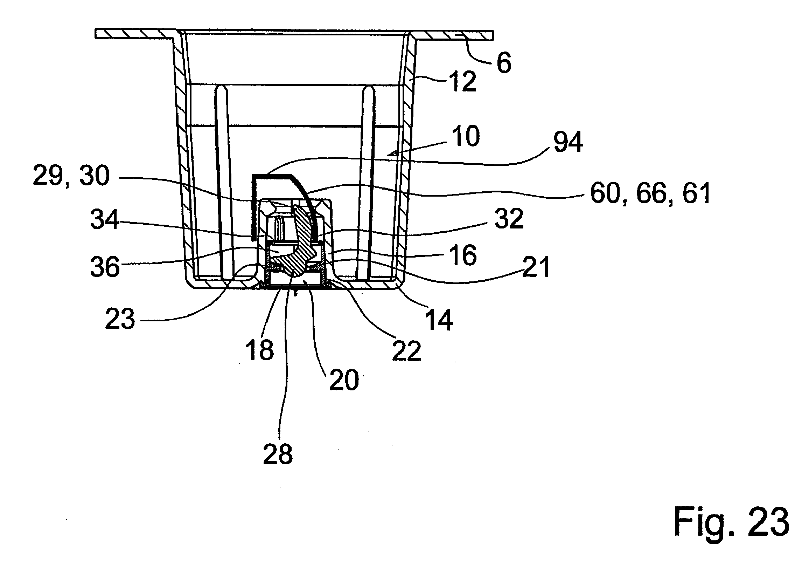

Eine ähnliche Ausführungsform ist in der Figur 23 dargestellt, wo ebenfalls eine Kappe 94 vorgesehen ist, die eine Druckplatte 66 aufweist.

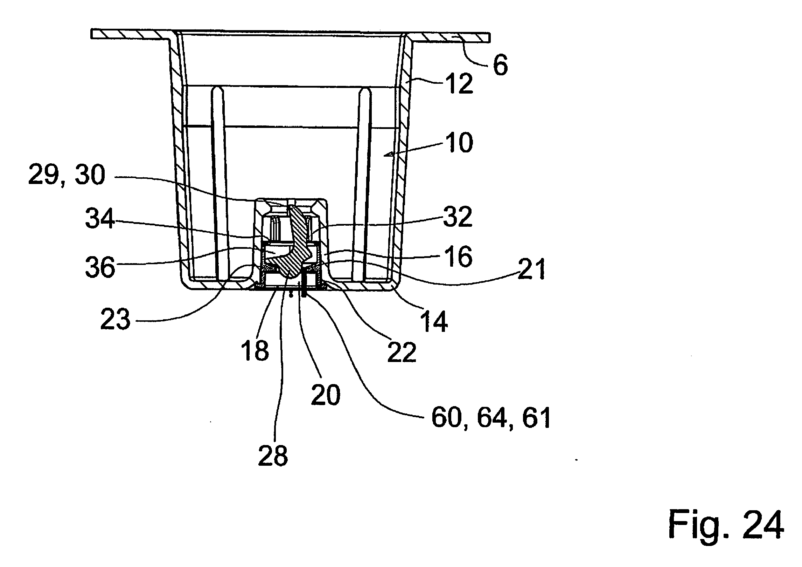

Während die Ausführungsformen der Figuren 11 bis 23 von oben in die Auslauföffnung 18 eingesteckt werden, so dass der Angriff am Hebel 30 erfolgt, sind in den Figuren 24 bis 32 Ausführungsformen der Ventilbetätigungseinrichtung 60 dargestellt, die von unten eingesteckt werden und somit unmittelbar an der Scheibe 26 bzw. dem kugelförmigen Vorsprung 28 angreifen.

In der Figur 24 ist als einfache Ausführungsform ein Stift 64 dargestellt, der in die Ventilöffnung 21 eingesteckt wird, so dass der Absperrkörper 24 in Kippstellung gebracht wird und somit die Ventilöffnung 21 freigibt.

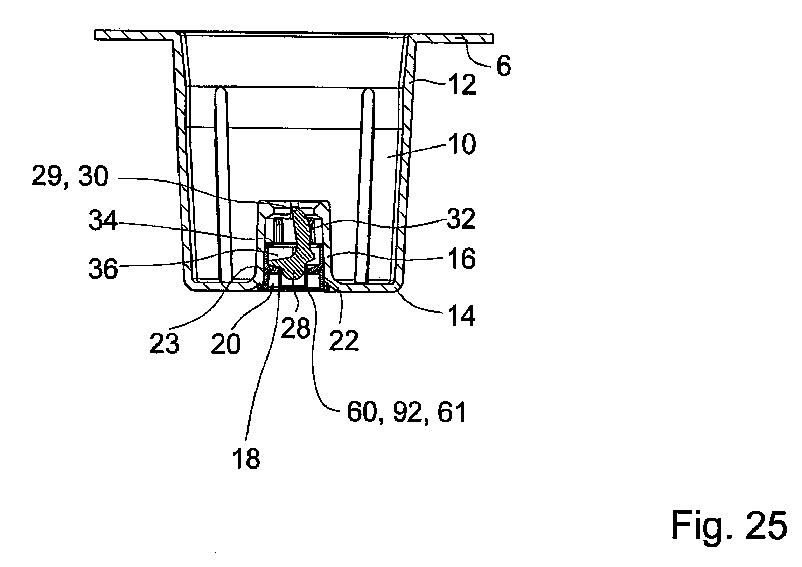

In der Figur 25 ist ein Bügel 92 dargestellt, dessen Außendurchmesser dem Innendurchmesser der Ventilöffnung 21 entspricht und somit den gesamten Absperrkörper 24 anhebt und/oder kippt. Um die Kippstellung zu erreichen, sind die beiden Schenkel des Bügels 92 unterschiedlich lang ausgebildet.

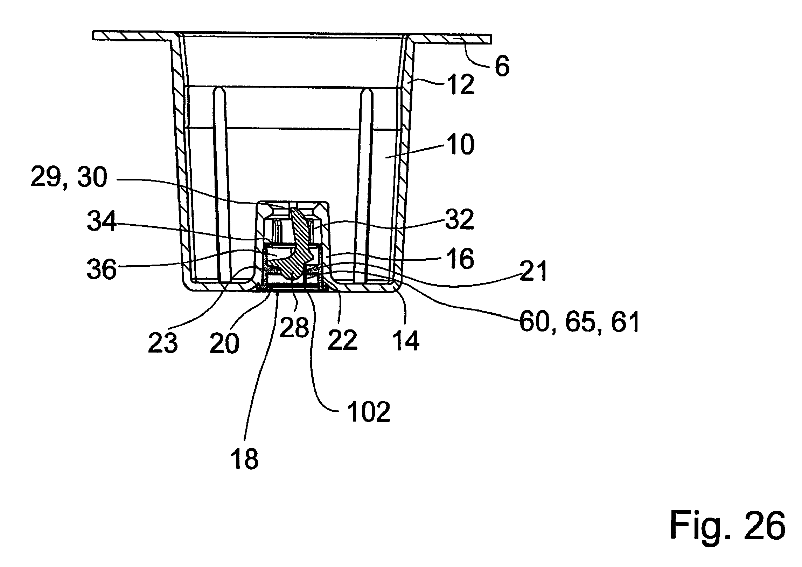

In der Figur 26 ist eine Ausführungsform dargestellt, bei der eine Platte 65 vorgesehen ist, die auf einer Kreisscheibe 102 befestigt ist, die in den Ventilsitzkörper 22 von unten eingesetzt ist. Die Platte 65 ist so positioniert, dass sie einseitig an dem kugelförmigen Vorsprung 28 des Absperrkörpers 24 angreift und den Absperrkörper 24 in Kippstellung bewegt.

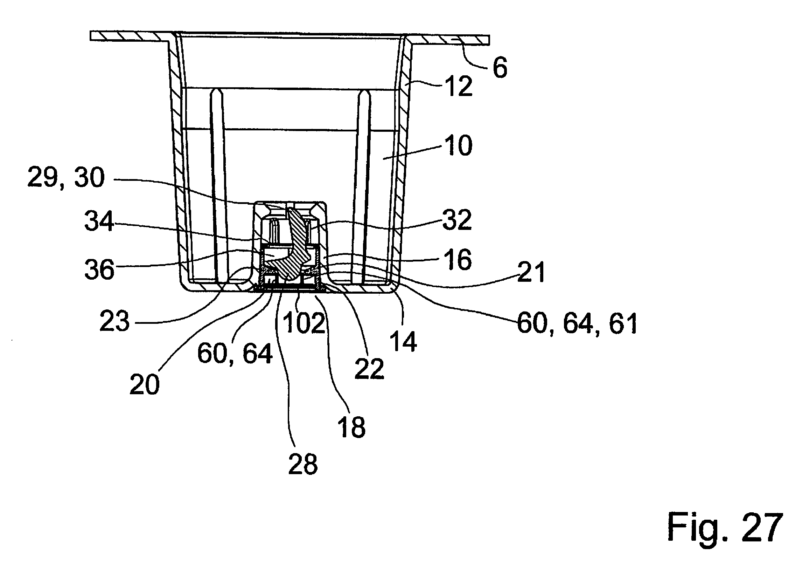

In der Figur 27 ist eine Kreisscheibe 102 mit zwei Stiften 64 vorgesehen, die den gesamten Absperrkörper 24 beim Einsetzen der Kreisscheibe 102 nach oben anheben, wodurch die Ventilöffnung 21 freigegeben wird.

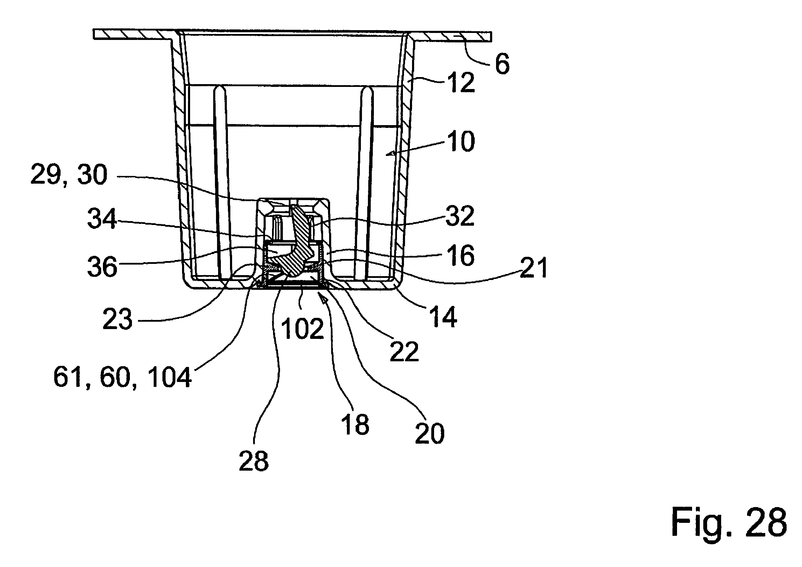

In der Figur 28 ist die Kreisscheibe 102 mit einem Federbein 104 versehen, das ebenfalls an dem kugelförmigen Vorsprung 28 des Absperrkörpers 24 angreift und den Absperrkörper nach oben anhebt.

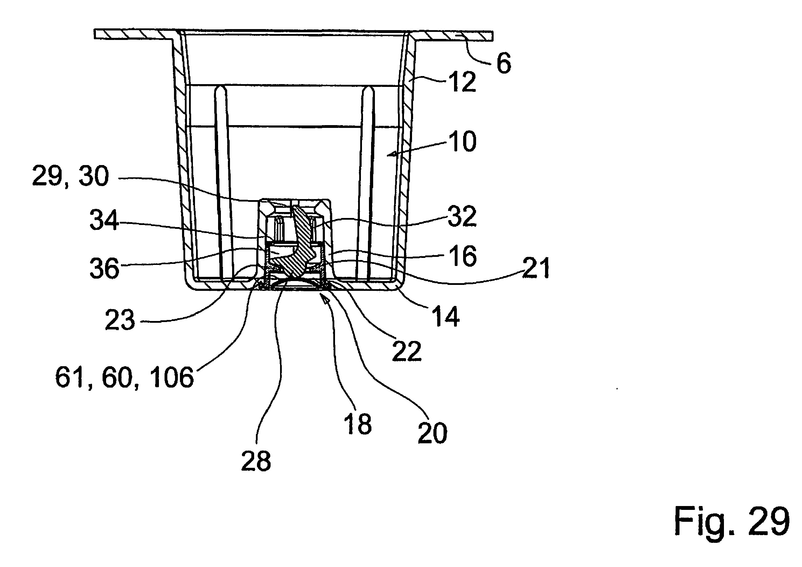

In der Figur 29 ist die Kreisscheibe als gewölbte Druckscheibe 106 ausgebildet, die unmittelbar an dem kugelförmigen Vorsprung 28 angreift.

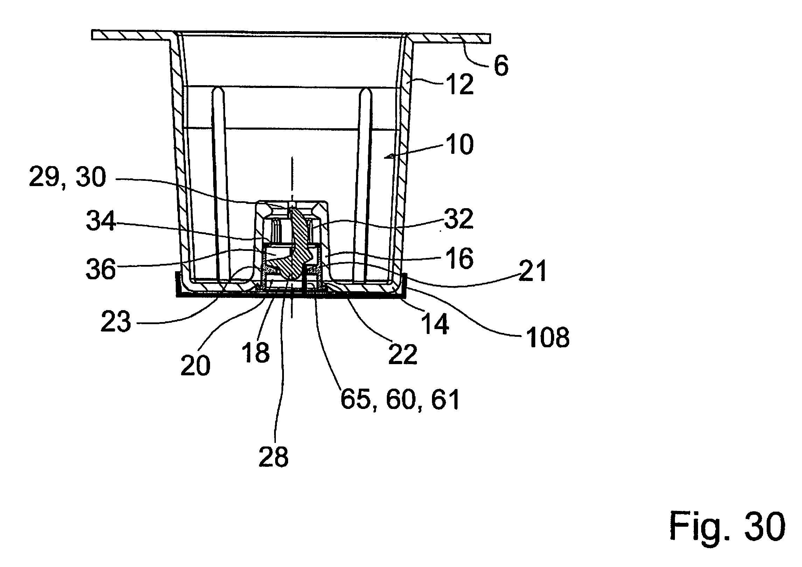

In der Figur 30 ist eine Bodenkappe 108 dargestellt, die die gesamte Bodenwand 14 der Aufnahmekammer 10 umgreift. Innerhalb der Kappe ist ein Stift oder eine Platte 65 nach oben aufragend angeordnet, die in die Ventilöffnung 21 eingreift und den Absperrkörper 24 nach oben bewegt.

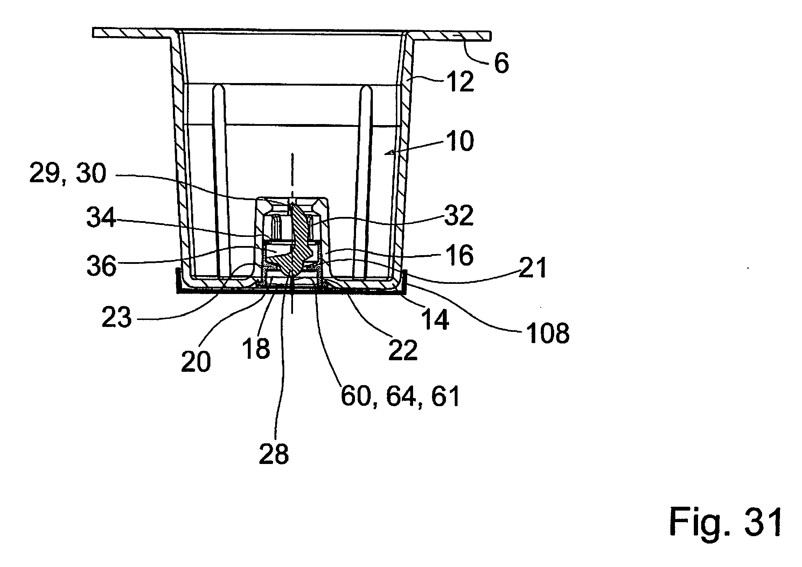

In der Figur 31 ist ähnlich der Figur 30 eine Bodenkappe 108 angeordnet, wobei der Stift 64 mittig angeordnet ist, so dass er mittig am kugelförmigen Vorsprung 28 des Absperrkörpers 24 angreifen kann.

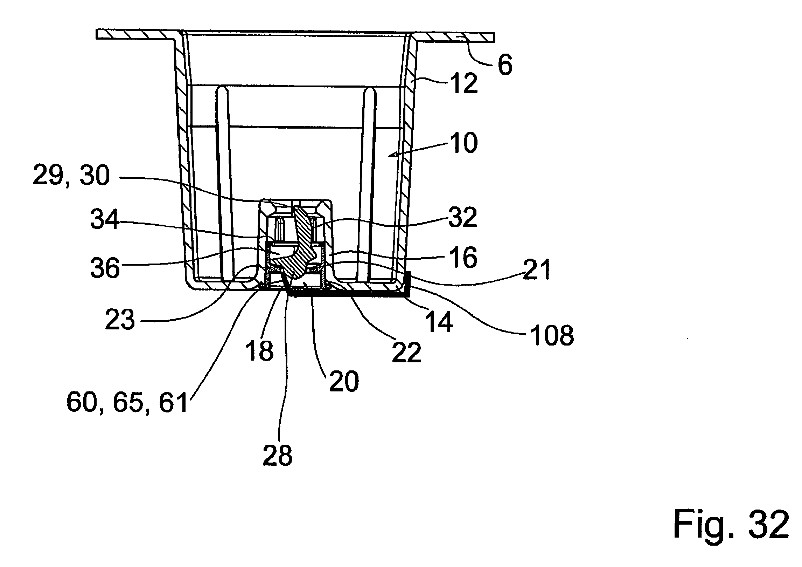

In der Figur 32 ist eine Ausführungsform dargestellt, die ebenfalls eine Bodenkappe 108 umfasst, die aber nur teilweise die Bodenwand 14 der Aufnahmekammer 10 umgreift. Eine nach oben abstehende Platte 65 greift an dem kugelförmigen Vorsprung 28 des Absperrkörpers 24 an.

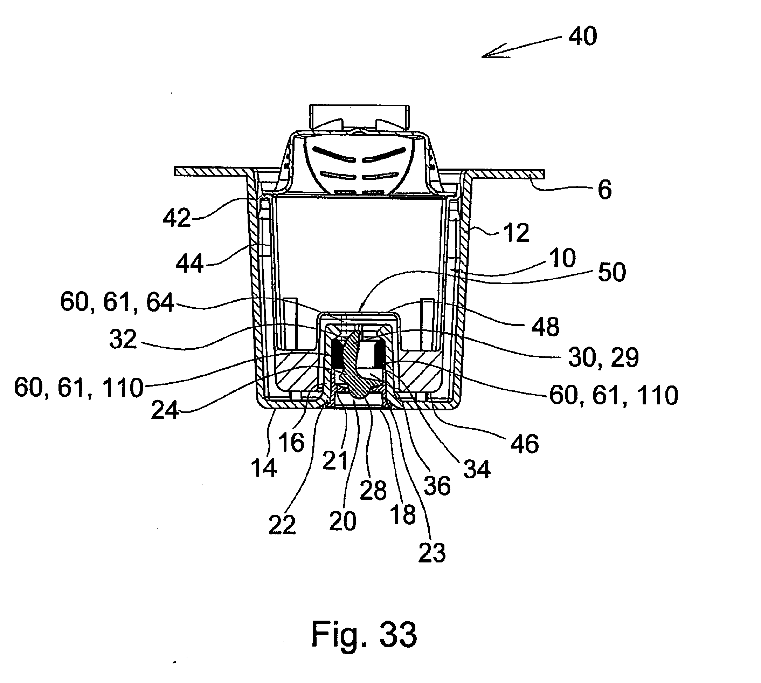

In der Figur 33 ist die Einstülpung 16 an ihrer Innenseite mit sich in vertikaler Richtung erstreckenden Rippen 110 ausgestattet, die Betätigungselemente 61 der Ventilbetätigungseinrichtung 60 bilden. Das Ventil 20 ist bei dieser Ausführungsform drehbar in der Einstülpung 16 angeordnet. Es ist dadurch möglich, das Ventil durch Drehen in der Einstülpung 16 zu öffnen und zu schließen.

Wenn das Ventil 20 in eine Stellung gebracht wird, in der der Hebel 30 mit seiner Nockenfläche 32 auf einer Rippe 110 zu liegen kommt, wird der Absperrkörper vom Ventilsitz 23 gelöst und gibt die Ventilöffnung 21 frei. Durch ein weiteres Drehen des Ventils 20 wird ein Zwischenraum zwischen den Rippen 110 erreicht und der Absperrkörper 24 kann in seine Schließstellung fallen.

Um das Ventil 20 beim Einsetzen der Filterkartusche 40 öffnen zu können, obwohl es sich in Schließstellung befindet, kann die Filterkartusche ebenfalls über eine Ventilbetätigungseinrichtung 60 verfügen. Das Betätigungselement 61 ist ein Stift 64, der gestrichelt eingezeichnet ist und sich beispielsweise beim Einstecken der Filterkartusche im Freiraum zwischen zwei Rippen 110 befindet und an der Nockenfläche 32 angreift.

### Bezugszeichenliste

- 1: Flüssigkeitsbehandlungseinrichtung
- 5: Flüssigkeitsbehälter
- 6: Bodenwand
- 8: Auffangbehälter

- 10: Aufnahmekammer
- 12: Umfangswand
- 14: Bodenwand
- 16: Einstülpung
- 18: Auslauföffnung

- 20: Ventil
- 21: Ventilöffnung
- 22: Ventilsitzkörper
- 23: Ventilsitz
- 24: Absperrkörper
- 25: Ringbund
- 26: Dichtscheibe
- 27: Dichtfläche
- 28: kugelförmiger Vorsprung
- 29: Element

- 30: Hebel
- 32: Nockenfläche
- 33: Längsachse
- 34: Sperrscheibe
- 36: Ventilkammer
- 38: Schlitz

- 40: Flüssigkeitsbehandlungskartusche
- 42: Dichtrand
- 44: Kartuschenwand
- 46: Kartuschenboden
- 48: Einstülpung

- 50: Auslassöffnung

- 60: Ventilbetätigungseinrichtung
- 61: Betätigungselement
- 62: ringförmiger Dorn
- 64: Stift
- 65: Platte
- 66: elastische Druckplatte
- 68: elastischer Druckkörper

- 70: Zugmittel
- 72: V-förmiges Element

- 80: Hülse
- 82: Außenbund
- 84: Ringgriff
- 86: gebogene Hülse
- 88: Distanzring

- 90: federndes Element
- 92: Bügel
- 94: Kappe
- 95: gekrümmte Druckplatte
- 96: Kugel- oder zylindrisches Element
- 98: Distanzkörper

- 100: Zugring
- 102: Kreisscheibe
- 104: Federbein
- 106: Druckscheibe
- 108: Bodenkappe

- 110: Rippe

## Patentansprüche

1. Ventilbetätigungseinrichtung (60) eines Ventils (20),
das einen beweglichen Absperrkörper (24) und einen Ventilsitz (23) umfasst, wobei der Absperrkörper (24) in einer Ventilkammer (36) gefangen ist und in der Ventilkammer (36) in horizontaler und in vertikaler Richtung beweglich ist,
das sich in der Auslauföffnung (18) eines
Flüssigkeitsbehälters (5) einer Flüssigkeitsbehandlungsvorrichtung (1) befindet, und
das sich bei in der Flüssigkeitsbehandlungsvorrichtung (1) eingebautem Flüssigkeitsbehälter (5) in Schließposition befindet,
wobei die Ventilbetätigungseinrichtung (60) beim Anbringen an dem sich in Schließposition befindenden Ventil (20) zum Öffnen des Ventils (20) mittels Ausüben einer horizontalen Kraftkomponente ausgebildet ist.

2. Einrichtung nach Anspruch 1, **dadurch gekennzeichnet, dass** die Ventilbetätigungseinrichtung (60) mindestens ein Betätigungselement (61) aufweist.

3. Einrichtung nach Anspruch 2, **dadurch gekennzeichnet, dass** das Betätigungselement (61) steckbar ist.

4. Flüssigkeitsbehälter (5) einer
Flüssigkeitsbehandlungsvorrichtung (1), wobei der Flüssigkeitsbehälter (5) eine Auslauföffnung (18) und ein in der Auslauföffnung (18) angeordnetes Ventil (20) aufweist,
**dadurch gekennzeichnet,**
**dass** das Ventil (20) einen beweglichen Absperrkörper (24) und einen Ventilsitz (23) umfasst, wobei der Absperrkörper (24) in einer Ventilkammer (36) gefangen ist und in der Ventilkammer (36) in horizontaler und in vertikaler Richtung beweglich ist,
**dass** das Ventil (20) sich bei in der Flüssigkeitsbehandlungsvorrichtung (1) eingebautem Flüssigkeitsbehälter (5) in Schließposition befindet, und dass eine Ventilbetätigungseinrichtung (60) vorgesehen ist, die bei Anbringen an dem sich in Schließposition befindenden Ventil (20) zum Öffnen des Ventils (20) mittels Ausüben einer horizontalen Kraftkomponente ausgebildet ist.

5. Flüssigkeitsbehälter nach Anspruch 4, **dadurch gekennzeichnet, dass** der Absperrköper (24) ein aus der Ventilkammer (36) herausragendes Element (29) aufweist.

6. Flüssigkeitsbehälter nach Anspruch 5, **dadurch gekennzeichnet, dass** das Element (29) ein exzentrisch angeordneter Hebel (30) ist.

7. Flüssigkeitsbehälter nach Anspruch 6, **dadurch gekennzeichnet, dass** der Hebel (30) eine Nockenfläche (32) aufweist.

8. Flüssigkeitsbehälter nach Anspruch 6 oder 7, wobei der Absperrkörper (24) eine Längsachse (33) aufweist, **dadurch gekennzeichnet, dass** sich der Hebel (30) ausgehend von der Nockenfläche (32) bis zur Längsachse (33) oder darüber hinaus erstreckt.

9. Flüssigkeitsbehälter nach einem der Ansprüche 6 bis 8, **dadurch gekennzeichnet, dass** der Hebel (30) sich senkrecht nach oben von dem Absperrkörper (24) erstreckt.

10. Flüssigkeitsbehälter nach einem der Ansprüche 4 bis 9, **dadurch gekennzeichnet, dass** die Ventilkammer (36) nach unten durch den Ventilsitz (23) und nach oben durch eine Sperrscheibe (34) begrenzt ist.

11. Flüssigkeitsbehälter nach Anspruch 10, **dadurch gekennzeichnet, dass** der Ventilsitz (23) von einem Ventilsitzkörper (22) gebildet wird, wobei der Ventilsitzkörper (22) die Ventilkammer (36) nach unten und seitlich und die Sperrscheibe (34) die Ventilkammer (36) nach oben begrenzt, wobei insbesondere die Sperrscheibe (34) einen Schlitz aufweist.

12. Flüssigkeitsbehandlungsvorrichtung (1) mit einer Flüssigkeitsbehandlungskartusche (40) und mit einem Flüssigkeitsbehälter (5) gemäß einem der Ansprüche 4 bis 11.

13. Flüssigkeitsbehandlungsvorrichtung nach Anspruch 12, **dadurch gekennzeichnet, dass** die Ventilbetätigungseinrichtung (60) an der Flüssigkeitsbehandlungskartusche (40) angeordnet ist.

14. Flüssigkeitsbehandlungsvorrichtung nach einem der Ansprüche 12 oder 13, **dadurch gekennzeichnet, dass** die Ventilbetätigungseinrichtung (60) ein ringförmiges Element (62) ist oder aus einem Fingerkranz besteht.

15. Verwendung einer Flüssigkeitsbehandlungsvorrichtung nach einem der Ansprüche 12 bis 14 zur Filtration von Wasser, wobei die Flüssigkeitsbehandlungsvorrichtung eine Flüssigkeitsfiltervorrichtung mit einer Filterkartusche ist.

## Claims

1. Valve actuation device (60) for actuating a valve (20) comprising a movable shut-off body (24) and a valve seat (23), wherein the shut-off body (24) is captured in a valve chamber (36) and is movable in horizontal and vertical direction in the valve chamber (36), the valve being located in the discharge opening (18) of a liquid container (5) of a liquid treatment device (1), and being in closed position when the liquid container (5) is installed in the liquid treatment device (1), wherein the valve actuation device (60) is constructed to open the valve (20) by exerting a horizontal force component when the device is applied to the valve (20) in the closed position.

2. Device according to claim 1, **characterised in that** the valve actuation device (60) is provided with at least one actuation element (61).

3. Device according to claim 2, **characterised in that** the actuation element (61) can be plugged in.

4. Liquid container (5) of a liquid treatment device (1), wherein the liquid container (5) is provided with a discharge opening (18) and a valve (20) arranged in the discharge opening (18), **characterised in that**
the valve (20) comprises a movable shut-off body (24) and a valve seat (23), the shut-off body (24) being captured in a valve chamber (36) and being movable in horizontal and vertical direction in the valve chamber (36),
**in that** the valve (20) is in the closed position when the liquid container (5) is installed in the liquid treatment device (1), and
**in that** a valve actuation device (60) is provided that is constructed to open the valve (20) by exerting a horizontal force component when the device is applied to the valve (20) in the closed position.

5. Liquid container according to claim 4, **characterised in that** the shut-off body (24) is provided with an element (29) that projects out of the valve chamber (36).

6. Liquid container according to claim 5, **characterised in that** the element (29) is an eccentrically arranged lever (30).

7. Liquid container according to claim 6, **characterised in that** the lever (30) is provided with a cam face (32).

8. Liquid container according to claim 6 or 7,
wherein the shut-off body (24) is provided with a longitudinal axis (33), **characterised in that** the lever (30) extends to or beyond the longitudinal axis (33) from the cam face (32).

9. Liquid container according to any one of claims 6 to 8, **characterised in that** the lever (30) extends vertically upwards from the shut-off body (24).

10. Liquid container according to any one of claims 4 to 9, **characterised in that** the valve chamber (36) is delimited downwardly by the valve seat (23) and upwardly by a locking disk (34).

11. Liquid container according to claim 10, **characterised in that** the valve seat (23) is formed by a valve seat body (22), wherein the valve seat body (22) delimits the valve chamber (36) downwardly and laterally, and the locking disk (34) delimits the valve chamber (36) upwardly, in particular wherein the locking disk (34) is provided with a slot.

12. Liquid treatment device (1) with a liquid treatment cartridge (40) and a liquid container (5) according to any one of claims 4 to 11.

13. Liquid treatment device according to claim 12, **characterised in that** the valve actuation device (60) is arranged on the liquid treatment cartridge (40).

14. Liquid treatment device according to claim 12 or 13, **characterised in that** the valve actuation device (60) is an annular element (62) or consists of a finger ring.

15. Use of a liquid treatment device according to any one of claims 12 to 14 for filtering water, wherein the liquid treatment device is a liquid filter device comprising a filter cartridge.

## Revendications

1. Dispositif d'actionnement (60) d'une soupape (20),
qui comprend un corps d'obturation mobile (24) et un siège de soupape (23), dans lequel le corps d'obturation (24) est captif dans une chambre de soupape (36) et est mobile dans la chambre de soupape (36) dans les directions horizontale et verticale,
qui se trouve dans l'orifice de décharge (18) d'un récipient de liquide (5) d'un dispositif de traitement de liquide (1), et
qui se trouve en position de fermeture lorsque le récipient de liquide (5) est incorporé au dispositif de traitement de liquide (1),
dans lequel le dispositif d'actionnement de soupape (60) est conformé pour, lors de l'application sur la soupape (20) se trouvant en position de fermeture, ouvrir la soupape (20) en exerçant une composante de force horizontale.

2. Dispositif selon la revendication 1, **caractérisé en ce que** le dispositif d'actionnement de soupape (60) présente au moins un élément
d'actionnement (61).

3. Dispositif selon la revendication 2, **caractérisé en ce que** l'élément d'actionnement (61) est enfichable.

4. Récipient de liquide (5) d'un dispositif de traitement de liquide (1), dans lequel le récipient de liquide (5) présente un orifice de décharge (18) et une soupape (20) agencée dans l'orifice de décharge (18), **caractérisé en ce que** la soupape (20) comprend un corps d'obturation mobile (24) et un siège de soupape (23), dans lequel le corps d'obturation (24) est captif dans une chambre de soupape (36) et est mobile dans la chambre de soupape (36) dans les directions horizontale et verticale,
la soupape (20) se trouve en position de fermeture lorsque le récipient de liquide (5) est incorporé au dispositif de traitement de liquide (1), et
il est prévu un dispositif d'actionnement de soupape (60) qui est conformé pour, lors de l'application sur la soupape (20) se trouvant en position de fermeture, ouvrir la soupape (20) en exerçant une composante de force horizontale.

5. Récipient de liquide selon la revendication 4, **caractérisé en ce que** le corps d'obturation (24) présente un élément (29) dépassant de la chambre de soupape (36).

6. Récipient de liquide selon la revendication 5, **caractérisé en ce que** l'élément (29) est un levier (30) agencé de manière excentrique.

7. Récipient de liquide selon la revendication 6, **caractérisé en ce que** le levier (30) présente une surface de came (32).

8. Récipient de liquide selon la revendication 6 ou 7, dans lequel le corps d'obturation (24) présente un axe longitudinal (33), **caractérisé en ce que** le levier (30) s'étend de la surface de came (32) à l'axe longitudinal (33) ou au-delà.

9. Récipient de liquide selon l'une quelconque des revendications 6 à 8, **caractérisé en ce que** le levier (30) s'étend vers le haut depuis le corps d'obturation (24).

10. Récipient de liquide selon l'une quelconque des revendications 4 à 9, **caractérisé en ce que** la chambre de soupape (36) est délimitée vers le bas par le siège de soupape (23) et vers le haut par un disque d'arrêt (34).

11. Récipient de liquide selon la
revendication 10, **caractérisé en ce que** le siège de soupape (23) est formé par un corps de siège de soupape (22), dans lequel le corps de siège de soupape (22) délimite la chambre de soupape (36) vers le bas et latéralement et le disque d'arrêt (34) délimite la chambre de soupape (36) vers le haut, dans lequel en particulier le disque d'arrêt (34) présente une fente.

12. Dispositif de traitement de liquide (1) avec une cartouche de traitement de liquide (40) et un récipient de liquide (5) selon l'une quelconque des revendications 4 à 11.

13. Dispositif de traitement de liquide selon la revendication 12, **caractérisé en ce que** le dispositif d'actionnement de soupape (60) est agencé sur la cartouche de traitement de liquide (40).

14. Dispositif de traitement de liquide selon l'une quelconque des revendications 12 ou 13, **caractérisé en ce que** le dispositif d'actionnement de soupape (60) est un élément annulaire (62) ou est constitué d'un rebord de préhension.

15. Utilisation d'un dispositif de traitement de liquide selon l'une quelconque des revendications 12 à 14 pour la filtration d'eau, dans laquelle le dispositif de traitement de liquide est un dispositif de filtrage de liquide avec une cartouche de filtre.
